# EUROPEAN PATENT SPECIFICATION

(11) **EP 4 280 881 B1**
(45) Date of publication and mention of the grant of the patent: **30.10.2024**
(21) Application number: 21840188.3
(22) Date of filing: 15.12.2021
(51) Int. Cl.: A21B 3/15

(54) **FLAT BAKING TRAY FOR BAKING FOOD WITH A SYSTEM FOR COMPENSATING FOR THE DIFFERENCES IN THERMAL EXPANSION OF THE COMPONENTS THEREOF**
FLACHES BACKBLECH ZUM BACKEN VON LEBENSMITTELN MIT EINEM SYSTEM ZUM AUSGLEICH DER UNTERSCHIEDLICHEN WÄRMEAUSDEHNUNG SEINER BESTANDTEILE
PLAQUE DE CUISSON PLATE POUR LA CUISSON D'ALIMENTS AVEC UN SYSTÈME DE COMPENSATION DES DIFFÉRENCES DE DILATATION THERMIQUE DE SES COMPOSANTS

(30) Priority: 11.03.2021 IT 202100005684
(43) Date of publication of application: 29.11.2023
(73) Proprietor: Omev SNC di Virginio e Figli, 28010 Caltignaga (NO) (IT)
(72) Inventor: VIRGINIO, Claudio, 28010 Caltignaga (NO) (IT)
(74) Representative: Mozzanica, Luca
(86) International application number: PCT/IT2021/050415
(87) International publication number: WO 2022/190143

(56) References cited:
- EP-A1- 2 014 171
- EP-A1- 2 055 190
- EP-A1- 2 394 514
- DE-U1- 202010 007 826
- ES-A1- 2 171 100
- FR-A1- 2 572 891
- US-A- 2 217 987

## Description

### Field of application of the invention

The present invention is applied to the field of utensils for baking food in an oven. Namely, the present invention relates to flat baking trays.

### Overview of the prior art

The current flat baking trays for baking food comprise a flat sheet made of steel and integrally connected, by electric spot welding, to a tubular peripheral frame substantially shaped like a rectangular frame and made of steel as well.

When the temperature of the tray significantly increases (for example, following the introduction thereof into an oven), the steel from which it is made expands. However, the sheet and the frame expand at different speeds due to the effect both of the different mass and the different geometry thereof. The differences in thermal expansion between the sheet and the frame generate relatively intense stresses at the weld points. Given that the latter are highly rigid, the differences in thermal expansion deform the tray in a non-homothetic manner, causing the yielding of one or more weld points (and the subsequent at least partial disconnection of the sheet from the frame) or the cracking of the sheet over time.

The possibility of mutually connecting the sheet and the frame by means of rivets rather than by welding was considered in an attempt to obviate the above problem. Although rivets allow partially compensating for the differences in thermal expansion between the sheet and the frame, they however tend to loosen and detach from the sheet, with the risk of contaminating the food baking on the tray. Moreover, rivets do not allow having a watertight tray due to the holes required for the application thereof. A further problem associated with using rivets consists in the fact that the aforesaid holes make the tray washing operations by immersion in detergents difficult. The latter indeed tend to stagnate in the holes of the frame, to then be brought to boiling during baking in the oven, with subsequent release of substances which are unhealthy.

Documents EP2394514 A1, EP2014171 A1, DE202010007826 U1, and ES2171100 A1 disclose prior art relevant to the invention.

### Objects of the invention

It is the object of the present invention to overcome the aforesaid drawbacks by indicating a flat baking tray for baking food in which the connection between the sheet and the frame is obtained so as to allow an at least partial compensation of the differences of thermal expansion between said two components of the tray (that is, between the sheet and the frame) without using rivets.

### Summary and advantages of the invention

The present invention relates to a baking tray for baking food, said tray comprising:
- a metal sheet, preferably made of AISI 304 steel, which is at least partially flat,
   said sheet being delimited by an edge;
- a frame for supporting said sheet,
   said frame comprising one or more metal tubular elements, each of which preferably made of AISI 304 steel,
   each of said tubular elements including a first, preferably at least partially flat, wall extending in length,
   said tubular elements being connected to one another so that said first walls describe, as a whole and at least partially, a closed path delimiting, at least partially, a portion of space inside said frame.
   In light of the foregoing and to avoid any misunderstanding, the aforesaid portion of space inside the frame is enclosed between the tubular elements and is outlined (in the sense of "being reproducible at the outline thereof") by the first walls of said tubular elements. The "first walls" therefore face one another, that is said portion of space.
   Incidentally, the frame comprises "one or more tubular elements" given that, equivalently to what was specified above, it could comprise a single tubular element closed on itself so that the first wall thereof at least partially describes a closed path at least partially delimiting a portion of space inside said frame. That is, the aforesaid tubular elements could correspond to substantially consecutive stretches of a single tubular element;
- connecting means of said sheet, at said edge, to said frame, at said tubular elements,
   in which according to the invention, said sheet is accommodated in said portion of space (inside the frame) at least at said edge so as to be at least partially (that is, at least at said edge) interposed between said tubular elements. In other words, the sheet is at least partially accommodated in the portion of space inside the frame, and namely at the edge thereof,
   said sheet, at said edge, being folded over itself, preferably in a "U", so as to comprise an upper strip and a lower strip, which are at least partially flat, at least partially mutually opposite and at least partially at a given distance from each other,
   said sheet being accommodated in said portion of space (inside the frame) at, at least partially, said lower strip (that is, at at least a part of the lower strip thereof), with the assembly consisting of said upper strip, said lower strip and a fold which connects them mutually, at least partially facing said portion of space (in the frame) on the side of the concavity thereof,
   said connecting means comprising, for each of said tubular elements, a metal bar, preferably made of AISI 304 steel
- including at least a second wall, which is at least partially flat, extending in length and comprising a first edge and a second edge, which is opposite to said first edge,
   each of said first and second edges extending in length substantially in the same direction in which said second wall extends in length,
   and
- connected, by means of one or more welds preferably by electric welding, to said tubular element so that said second wall of said bar is:
   - accommodated in said portion of space (inside the frame) so as to be interposed between said tubular elements,
   - arranged transversely (according to the meaning "not parallel", that is in orthogonal or oblique manner) to said first wall of said tubular element to which said bar is connected
      and
   - opposite to said first wall of said tubular element to which said bar is connected, at least at said first edge,

for each of said bars, said second wall, at said second edge, being folded over itself, preferably in a "U", so as to comprise an upper strip and a lower strip, which are at least partially flat, at least partially mutually opposite and at least partially at a given distance from each other,
for each of said bars, the assembly, consisting of said upper strip of said second wall of said bar, of said lower strip of said second wall of said bar, and of a fold which mutually connects them, facing, on the side of the concavity thereof, said first wall of said tubular element to which said bar is connected,
for each of said tubular elements:
   - said lower strip of said sheet being at least partially interposed between said upper and lower strips of said second wall of said bar connected to said tubular element,
      with said edge of said sheet opposite to said fold which mutually connects said upper and lower strips of said second wall of said bar connected to said tubular element,
      so that said upper and lower strips of said second wall of said bar connected to said tubular element are at least partially mutually opposite with the at least partial interposition of said lower strip of said sheet,
         and
   - said upper strip of said second wall of said bar connected to said tubular element being at least partially interposed between said upper and lower strips of said sheet,
      so that said upper and lower strips of said sheet are at least partially mutually opposite with the at least partial interposition of said upper strip of said second wall of said bar connected to said tubular element,
moreover, for each of said tubular elements:
   - said lower strip of said sheet being sandwiched between said upper and lower strips of said second wall of said bar connected to said tubular element
      and/or
   - said upper strip of said second wall of said bar connected to said tubular element being sandwiched between said upper and lower strips of said sheet,
so that said sheet is connected to said tubular element.

In the tray of the invention, the connection between the sheet and the frame is such as to allow these two components to thermally expand without generating stresses, thus resulting in a disconnection of the sheet from the tray or cracking of the sheet, with the use of the tray. This result is achieved by virtue of the aforesaid connection means which couple the sheet to the frame, allowing a freedom of movement therebetween. Although it is sandwiched between the upper and lower strips of the second walls (of the aforesaid bars), or tightening, in conjunction with the upper strip of the sheet, the upper strips of the second walls (of the aforesaid bars), the lower strip of the sheet may indeed slide, in conjunction with the upper strip of the sheet, with respect to the frame. Although it is limited, said freedom of movement is sufficient to at least partially compensate for the differences in thermal expansion between the sheet and the frame. This not only increases the operating life of the tray, but also ensures an increased planarity upon a heating thereof in an oven, with subsequent decrease of "non conforming" product rejects.

A further advantage associated with the use of the tray of the invention consists in the fact that the first and second bars connected to the tubular elements of the frame act as ribs which allow reducing the cross section of the aforesaid tubular elements, rigidity being equal. Said reduction of the cross section results in a decrease in the overall weight of the frame, with the following benefits:
- less wear of the mechanical components of the system moving the tray (given that said mechanical components support and move a smaller load);
- reduction of the calories required to bake the food products (because the smaller mass of the tray results in a lesser absorption of heat, with subsequent reduction of energy consumption of the oven);
- reduction of the duration of the complete production cycle (in many cases, the tray is to indeed be at room temperature when the raw product is put on it and a tray having smaller mass cools down more quickly, allowing a quicker re-use thereof, and therefore increasing the hourly production of the system);
- increase of the usable area of the tray. The product deposited close to the frame indeed does not cook in optimal manner due to the heat absorbed by the latter. This effect is such as to force the food cooked closest to the frame to be entirely rejected in certain cases. The reduction of cross section of the tubular elements of the frame reduces this "non optimal" area of the tray, thus increasing the usable surface thereof.

Even if the frame and the sheet comprised in the tray of the invention preferably are made of AISI 304 steel, said two components could be made of different materials, for example stainless steel and aluminum, respectively. Advantageously therefore, non-homogeneous materials may be coupled in the tray of the invention, without the use of rivets.

The fact that the sheet is accommodated in the aforesaid portion of space inside the frame at, at least partially, the lower strip thereof advantageously ensures that the sheet, after being connected to the aforesaid bars as mentioned above and after the latter are fastened to the tubular elements of the frame by means of one or more electric welding welds, cannot be disconnected from the frame (thus coming out of the concavity of the second walls of the aforesaid bars).

Other innovative features of the present invention are disclosed in the following description and mentioned in the dependent claims.

According to an aspect of the invention, for each of said bars, said edge of said sheet is opposite to, but at a given distance from, said fold which mutually connects said upper and lower strips of said second wall of said bar.

According to this aspect of the invention, the ability of the tray of the invention to at least partially compensate for the differences in thermal expansion between the sheet and the tray, advantageously is even greater.

According to another aspect of the invention, said sheet is completely accommodated in said portion of space (inside the frame),
for each of said tubular elements, said second edge of said second wall of said bar connected to said tubular element is opposite to said fold which mutually connects said upper and lower strips of said sheet,
for each of said tubular elements, said fold, which mutually connects said upper and lower strips, being opposite to, and at a given distance from, said first wall of said tubular element in order to increase the ability of the tray of the invention to at least partially compensate for the differences in thermal expansion between the sheet and the frame.

According to this aspect of the invention, the sheet is completely interposed between the tubular elements of the frame.

According to another aspect of the invention, for each of said bars, said second edge of said second wall of said bar is opposite to, but at a given distance from, said fold which mutually connects said upper and lower strips of said sheet.

Also according to this aspect of the invention, the ability of the tray of the invention to at least partially compensate for the differences in thermal expansion between the sheet and the tray, advantageously is even greater.

According to another aspect of the invention, said sheet lies outside said portion of space (inside the frame) at least at:
- said upper strip of said sheet,
- a first portion of said lower strip of said sheet, which is consecutive (said first portion) to said upper strip thereof
   and
- said fold which mutually connects said upper and lower strips of said sheet,

for each of said tubular elements, said lower strip of said sheet being interposed between, and possibly sandwiched between, said upper and lower strips of said second wall of said bar connected to said tubular element, at, at least partially, a second portion of said lower strip of said sheet (that is, at at least a part of said second portion) including said edge of said sheet,
said first and second portions of said lower strip of said sheet being joined to each other by a third portion of said lower strip of said sheet,
said sheet being accommodated in said portion of space (inside the frame) at said second portion of said lower strip of said sheet and, at least partially, at said third portion of said lower strip of said sheet so as to be interposed between said tubular elements at least at said second portion of said lower strip of said sheet and, at least partially, at said third portion of said lower strip of said sheet,
the assembly consisting of said upper strip of said sheet, said lower strip of said sheet and said fold which mutually connects them facing said portion of space (inside the frame) on the side of the concavity thereof at least at said second portion of said lower strip of said sheet and, at least partially, at said third portion of said lower strip of said sheet,
for each of said tubular elements, said second edge of said second wall of said bar connected to said tubular element is opposite to said third portion of said lower strip of said sheet,
for each of said tubular elements, said third portion of said lower strip of said sheet is opposite to, and at a given distance from, said first wall of said tubular element in order to increase the ability of the tray of the invention to at least partially compensate for the differences in thermal expansion between the sheet and the frame.

Advantageously, according to this aspect of the invention, although it may not be disconnected from the frame (thus coming out of the concavity of the second walls of the aforesaid bars), the sheet lies on the frame, with the exception of a part of the lower strip (including the edge of the sheet).

According to another aspect of the invention, for each of said bars, said second edge of said second wall of said bar is opposite to, but at a given distance from, said third portion of said lower strip of said sheet.

Also according to this aspect of the invention, the ability of the tray of the invention to at least partially compensate for the differences in thermal expansion between the sheet and the tray, advantageously is even greater.

According to another aspect of the invention, each of said tubular elements has a rectangular-shaped cross section with a side of said rectangle corresponding to said first wall of said tubular element,
for each of said tubular elements, said bar connected to said tubular element
- having a substantially "L"-shaped cross section with an arm of said L corresponding to said second wall of said bar
   and
- being opposite and connected, by means of one or more welds preferably by electric welding, at a wall corresponding to the other arm of said L, to said tubular element at said first wall of the latter.

According to another aspect of the invention, for each of said tubular elements, said first portion of said lower strip of said sheet is at least partially opposite to said tubular element at a wall of the latter corresponding to a side of said rectangle which is orthogonal to said side corresponding to said first wall of said tubular element.

According to another aspect of the invention, in each of said bars, said upper and lower strips of said second wall of said bar are parallel to said sheet.

Also according to this aspect of the invention, the ability of the tray of the invention to at least partially compensate for the differences in thermal expansion between the sheet and the tray, advantageously is even greater.

According to another aspect of the invention, for each of said tubular elements, said first wall of said tubular element is orthogonal to said sheet.

Also according to this aspect of the invention, the ability of the tray of the invention to at least partially compensate for the differences in thermal expansion between the sheet and the tray, advantageously is even greater.

### Brief description of the drawings

Further objects and advantages of the present invention will become apparent from the following detailed description of embodiments thereof and from the accompanying drawings, given by mere way of non-limiting example, in which:
- **Figure 1** shows a top plan view of a tray according to the present invention;
- **Figure 2** shows a diagrammatic sectional view of the tray in Figure 1, along a plane A-A indicated in Figure 1;
- **Figure 3** shows a top plan view of a variant of the tray in Figure 1;
- **Figure 4** shows a diagrammatic sectional view of the tray in Figure 3, along a plane B-B indicated in Figure 3.

### Detailed description of preferred embodiments of the invention

Hereinafter in the present description, a drawing may also be shown with reference to elements not expressly indicated in that drawing but indicated in other drawings. The scale and proportions of the various elements depicted do not necessarily correspond to the real values.

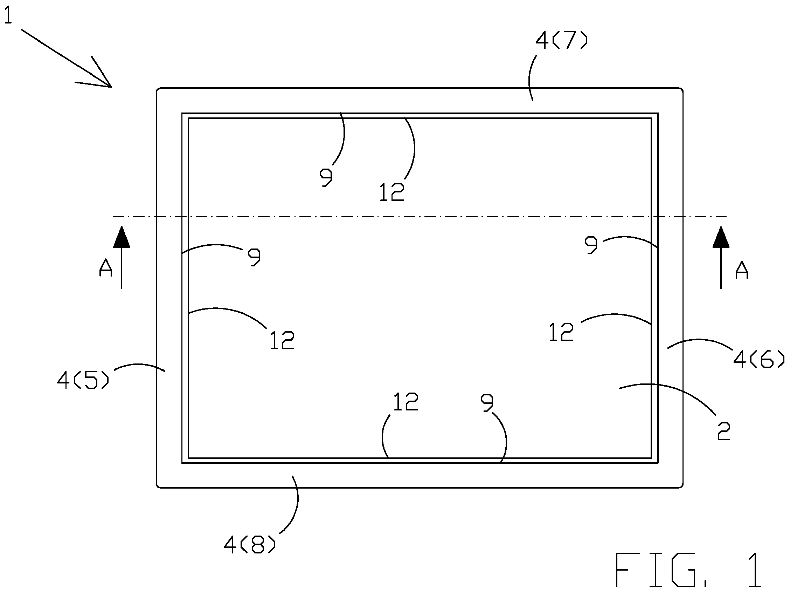

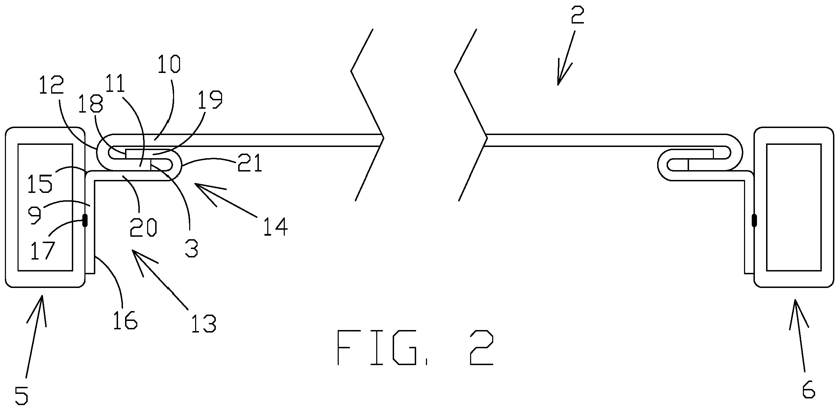

**Figures 1** **and** **2** show a tray 1 of the invention of the "baking" type, namely for baking food.

Tray 1 preferably is substantially rectangular and comprises an at least partially flat sheet 2. Like tray 1, sheet 2 preferably is substantially shaped like a rectangle and is made of metal, preferably of AISI 304 steel. Sheet 2 is delimited by an edge 3.

Sheet 2 is supported by a frame 4 comprising one or more metal tubular elements, each of which preferably made of AISI 304 steel. Namely, frame 4 preferably comprises four preferably rectilinear tubular elements 5, 6, 7 and 8 connected to one another at the respective ends preferably so as to form, overall, a frame which is substantially shaped like the perimeter of a rectangle. A first tubular element 5 and a second tubular element 6 are opposite to each other, preferably mutually parallel, and more preferably corresponding to the short sides of the rectangle as the perimeter of which frame 4 is substantially shaped. A third tubular element 7 and a fourth tubular element 8 are also opposite to each other and each of them is interposed between the above-mentioned tubular elements 5 and 6. The tubular elements 7 and 8 are preferably mutually parallel and more preferably, corresponding to the long sides of the rectangle as the perimeter of which frame 4 is substantially shaped. The tubular elements 7 and 8 are therefore preferably orthogonal to the tubular elements 5 and 6.

Sheet 2 is connected to frame 4 preferably so that the tubular elements 5 and 6 extend in respective directions which are parallel to the directions in which the short sides, respectively, of the rectangle of which sheet 2 is substantially shaped, extend. Similarly, the tubular elements 7 and 8 extend in respective directions which are parallel to the directions in which the long sides, respectively, of the rectangle of which sheet 2 is substantially shaped, extend.

Each of the tubular elements 5, 6, 7 and 8 has a preferably rectangular cross section. As shown in Figure 2, each of the tubular elements 5, 6, 7 and 8 is preferably arranged with the short sides of the rectangle as the perimeter of which the cross section of said tubular element 5, 6, 7 or 8 is substantially shaped, which are parallel to the plane on which sheet 2 substantially lies. Each of the tubular elements 5, 6, 7 and 8 therefore is preferably arranged with the long sides of the rectangle as the perimeter of which the cross section of said tubular element 5, 6, 7 or 8 is substantially shaped, which are orthogonal to the plane on which sheet 2 preferably lies.

Given that the tubular elements 5, 6, 7 and 8 are connected to one another at the respective ends preferably to form, overall, a frame which substantially is shaped like the perimeter of a rectangle, the tubular elements 5, 6, 7 and 8 are connected to one another so that wall 9 of each of the tubular elements 5, 6, 7, and 8 corresponding to a long side of the aforesaid rectangle as the perimeter of which the cross section of said tubular element 5, 6, 7 or 8 is substantially shaped and facing the inside of frame 4, is consecutively connected to the walls 9 of the two of the three remaining tubular elements, respectively, between which said tubular element 5, 6, 7 or 8 is interposed. In light of the foregoing, the four walls 9 of the tubular elements 5, 6, 7 and 8, respectively describe, as a whole and at least partially, a closed path delimiting, at least partially, a portion of space inside frame 4. Said portion of space inside frame 4 is therefore enclosed between the tubular elements 5, 6, 7 and 8 and is outlined (in the sense of "being reproducible at the outline thereof") by the walls 9 thereof. The walls 9 therefore face one another, that is said portion of space inside frame 4. Wall 9 of each of the tubular elements 5, 6, 7 and 8, which preferably is at least partially flat and extends in length, was indicated above with the term "first wall" (of said tubular element 5, 6, 7 or 8).

Incidentally, given that the tubular elements 5, 6, 7 and 8 are connected to one another at the respective ends preferably so as to form, overall, a frame which is substantially shaped like the perimeter of a rectangle, the aforesaid closed path described by the four walls 9 of the tubular elements 5, 6, 7 and 8 preferably is substantially rectangular.

As shown in Figure 2, sheet 2 is accommodated in the above-mentioned portion of space inside frame 4 at least at edge 3 thereof so as to be, at least at said edge 3, interposed between the tubular elements 5, 6, 7 and 8. In other words, sheet 2 is at least partially accommodated in the aforesaid portion of space inside frame 4, namely at least at edge 3.

Again, as shown in Figure 2, sheet 2 preferably is completely accommodated in the aforesaid portion of space inside frame 4, that is, is preferably completely interposed between the tubular elements 5, 6, 7 and 8. The rectangle as which sheet 2 is substantially shaped therefore has preferably slightly smaller dimensions than those of the rectangle as the perimeter of which frame 4 is substantially shaped. Given that the walls 9 of the tubular elements 5, 6, 7 and 8 face the aforesaid portion of space inside frame 4, they face sheet 2.

Sheet 2, at edge 3 thereof, is folded over itself, preferably in a "U", so as to comprise an upper strip 10 (lying in the same plane in which sheet 2 substantially lies) and a lower strip 11, which are at least partially flat, at least partially mutually opposite and at least partially at a given distance from each other. Sheet 2 is accommodated in the aforesaid portion of space inside frame 4 at, at least partially, the lower strip 11 (that is, at at least a part of strip 11), with the assembly consisting of the upper strip 10, the lower strip 11 and a fold 12 which connects them mutually, at least partially facing the aforesaid portion of space in frame 4 on the side of the concavity thereof.

Given that sheet 2 preferably is completely accommodated in the aforesaid portion of space inside frame 4, sheet 2 preferably is accommodated in said portion of space both at the strips 10 and 11 and fold 12. The strips 10 and 11 preferably are mutually parallel.

For each of the tubular elements 5, 6, 7 and 8, tray 1 comprises a metal bar 13, preferably made of AISI 304 steel. Each of the bars 13, falling within the previously mentioned "connecting means", has a cross-section which preferably is substantially "L"-shaped. Each bar 13 therefore preferably comprises a wall 14, which is at least partially flat, extending in length and identified above by the expression "second wall", which is orthogonally connected, at an edge 15 thereof, to the edge of a further wall 16, it also partially flat and extending in length. The arms of the aforesaid "L" of each bar 13 therefore correspond to the walls 14 and 16, respectively. The latter preferably are connected to each other by a fold at edge 15.

As indicated above, tray 1 comprises one of the bars 13 for each of the tubular elements 5, 6, 7 and 8. Namely, for each of the tubular elements 5, 6, 7 and 8, the corresponding bar 13 is connected to said tubular element 5, 6, 7 or 8 so that wall 14 is:
- accommodated in the portion of space inside frame 4 so as to be interposed between the tubular elements 5, 6, 7 and 8,
- arranged transversely, and preferably orthogonally, to wall 9 of said tubular element 5, 6, 7 or 8 to which said bar 13 is connected
   and
- opposite to wall 9 of said tubular element 5, 6, 7 or 8 to which said bar 13 is connected, at least at edge 15.

For this purpose, for each of the tubular elements 5, 6, 7 and 8, wall 16 of the corresponding bar 13 preferably is connected to said tubular element 5, 6, 7 or 8 by means of one or more welds 17, preferably by electric welding, at wall 9 of said tubular element 5, 6, 7 or 8. Wall 16 of each bar 13 preferably is opposite to, and more preferably at least partially matches, wall 9 of the tubular element 5, 6, 7 or 8 to which bar 13 to which wall 16 belongs, is connected.

In each bar 13, wall 14, at a second edge 18 opposite to edge 15, is folded over itself, preferably in a "U", so as to comprise an upper strip 19 and a lower strip 20, which are at least partially flat and at least partially mutually opposite and at least partially at a given distance from each other. In each bar 13, the assembly consisting of the upper strip 19 of wall 14 of said bar 13, the lower strip 20 of wall 14 of said bar 13 and a fold 21 mutually connecting them, faces, on the side of the concavity thereof, wall 9 of the tubular element 5, 6, 7 or 9 to which said bar 13 is connected.

Incidentally, in each bar 13, each of the edges 15 and 18 extends in length substantially in the same direction in which wall 14 to which the edges 15 and 18 belong, extends.

In each bar 13, the edges 15 and 18 are preferably parallel, both to each other and to wall 9 to which bar 13, to which the edges 15 and 18 belong, is connected. In each bar 13, the strips 19 and 20 are preferably orthogonal both to wall 9 to which bar 13 to which the edges 15 and 18 belong, is connected.

Like sheet 2, also the bars 13 preferably are completely accommodated in the aforesaid portion of space inside frame 4. Each bar 13 therefore preferably is accommodated in said portion of space at both the walls 14 and 16 (and therefore both of both the strips 19 and 20 and fold 21).

As shown in Figure 2, for each of the tubular elements 5, 6, 7 and 8, the lower strip 11 of sheet 2 is at least partially interposed between the upper strip 19 of the wall 14 of bar 13 connected to said tubular element 5, 6, 7 or 8, and the lower strip 20 of said wall 14 (of bar 13 connected to said tubular element 5, 6, 7, and 8) with fold 12 which is opposite to, and preferably at a given distance from, wall 9 of said tubular element 5, 6, 7 or 8 so that the edge 3 of sheet 2 is opposite to, and preferably at a given distance from, fold 21 mutually connecting said strips 19 and 20 (of the wall 14 of bar 13 connected to said tubular element 5, 6, 7 and 8) and so that the latter are at least partially opposite with the interposition, at least partial, of the strip 11 of sheet 2.

In addition to the foregoing, for each of the tubular elements 5, 6, 7 and 8, the upper strip 19 of the wall 14 of bar 13 connected to said tubular element 5, 6, 7 or 8 is at least partially interposed between the upper strip 10 and the lower strip 11 of sheet 2 so that edge 18 of said wall 14 (of bar 13 connected to said tubular element 5, 6, 7 or 8) is opposite to, and preferably at a given distance from, fold 12 mutually connecting the strips 10 and 11, and so that the latter are at least partially mutually opposite with the interposition, at least partial, of said strip 19 (of the wall 14 of bar 13 connected to said tubular element 5, 6, 7 or 8). For each of the tubular elements 5, 6, 7 and 8, the lower strip 11 of sheet 2 is sandwiched between the upper strip 19 of the wall 14 of bar 13 connected to said tubular element 5, 6, 7 or 8, and the lower strip 20 of said wall 14 (of bar 13 connected to said tubular element 5, 6, 7 or 8) so that sheet 2 is connected to said tubular element 5, 6, 7 or 8. Additionally or alternatively to this, for each of the tubular elements 5, 6, 7 and 8, the upper strip 19 of the wall 14 of bar 13 connected to said tubular element 5, 6, 7 or 8 is sandwiched between the upper strip 10 and the lower strip 11 of sheet 2, again so that sheet 2 is connected to said tubular element 5, 6, 7 or 8.

As shown in Figure 2, in each of the bars 13, the strips 19 and 20 of wall 14 belonging to said bar 13 preferably are parallel to sheet 2. Wall 9 of each of the tubular elements 5, 6, 7 and 8 moreover preferably is orthogonal to sheet 2.

In tray 1, the connection between sheet 2 and frame 4 is such as to allow these two components to thermally expand without generating stresses resulting in a disconnection of sheet 2 from frame 4 or a cracking of sheet 2 with the use of tray 1. This result is achieved by virtue of the bars 13 which couple sheet 2 to frame 4, allowing a freedom of movement therebetween. Although it is sandwiched, or tightening, between the strips 19 and 20 of the walls 14 of the bars 13, the lower strip 11 of sheet 2, in conjunction with strip 10, the strips 19 of the walls 14 of the bars 13, may indeed slide, in conjunction with strip 10, with respect to frame 4. Although it is limited, said freedom of movement is sufficient to at least partially compensate for the differences in thermal expansion between sheet 2 and frame 4.

The bars 13 also act as ribs for frame 4 and advantageously allow the cross section of the tubular elements 5, 6, 7 and 8 to be reduced, rigidity being equal. To avoid any misunderstanding, the fact that sheet 2 is accommodated in the aforesaid portion of space inside frame 4 at, at least partially, strip 11 advantageously ensures that sheet 2, after being connected to the bars 13 and after the latter are fastened to the tubular elements 5, 6, 7 and 8 by means of one or more electric welding welds, cannot be disconnected from frame 4, thus coming out of the concavity of the walls 14 of the bars 13.

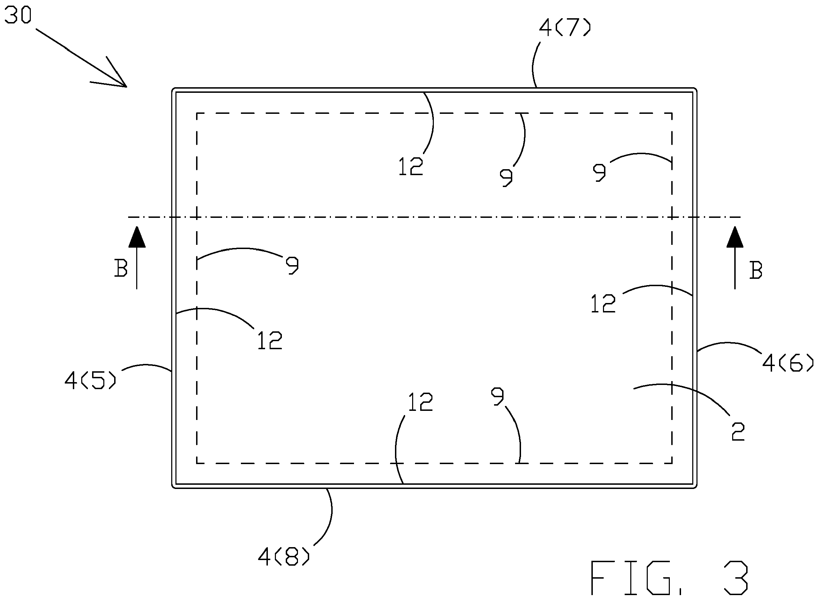

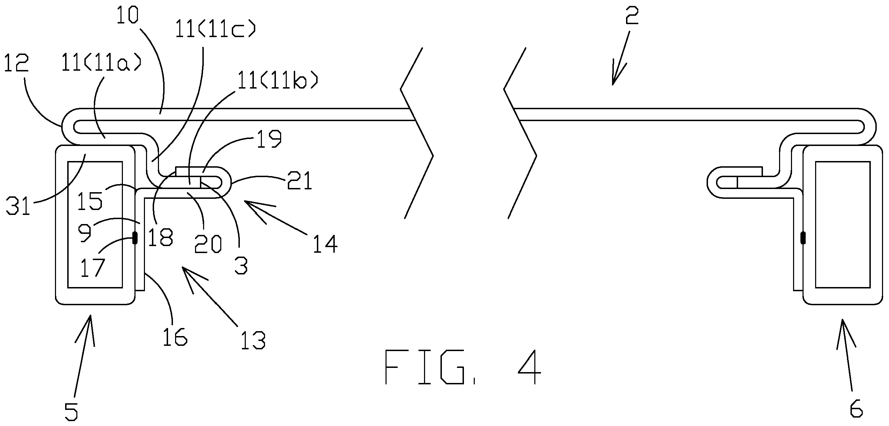

**Figures 3** **and** **4** show a tray 30 which differs from tray 1 in that sheet 2 is not completely accommodated in the aforesaid portion of space inside frame 4. Namely, sheet 2 lies outside said portion of space at the upper strip 10 thereof, a first portion 11a of the lower strip 11 of the consecutive strip 2 (said first portion 11a) to the upper strip 10, and fold 12 mutually connecting the strips 10 and 11 of sheet 2. For each of the tubular elements 5, 6, 7, and 8, the lower strip 11 of sheet 2 is also interposed between, and possibly sandwiched between, the upper strip 19 of the wall 14 of bar 13 connected to said tubular element 5, 6, 7 or 8, and the lower strip 20 of said wall 14 (of bar 13 connected to said tubular element 5, 6, 7 or 8) at, at least partially, a second portion 11b of said strip 11 (that is, at at least a part of portion 11b) including edge 3. The portions 11a and 11b of the lower strip 11 of sheet 2 are joined to each other by a third portion 11c of said strip 11. Sheet 2 therefore is accommodated in the aforesaid portion of space inside frame 4 at portion 11b and, at least partially, at portion 11c of strip 11 so as to be, at least at portion 11b and, at least partially, at portion 11c of strip 11, interposed between the tubular elements 5, 6, 7 and 8. The assembly consisting of the strips 10 and 11 of sheet 2 and of fold 12 mutually connecting them therefore faces the aforesaid portion of space inside frame 4, on the side of the concavity thereof, at least at portion 11b and, at least partially at portion 11 of the lower strip 11 of sheet 2.

Incidentally, portion 11a, at an edge thereof opposite to fold 12, preferably is connected to portion 11c, at an edge of the latter, by a fold. Portion 11c in turn is connected, at an edge thereof opposite to the edge to which portion 11c is connected to portion 11a, to portion 11b, at an edge of the latter opposite to edge 3, by a fold.

For each bar 13, the edge 18 of the wall 14 of bar 13 is opposite to, and preferably at a given distance from, portion 11c of the lower strip 11 of sheet 2. Additionally, for each of the tubular elements 5, 6, 7 and 8, the third portion 11c of the lower strip 11 of sheet 2 is opposite to, and preferably at a given distance from, wall 9 of said tubular element 5, 6, 7 or 8.

Although it cannot be disconnected from frame 4, thus coming out of the concavity of the walls 14 of the bars 13, the sheet 2 of tray 30 lies on frame 4, with the exception of a part of the lower strip 11 thereof (that is at edge 3).

As shown in Figure 4, the portions 11a and 11b preferably are mutually parallel and orthogonal to portion 11c. For each of the tubular elements 5, 6, 7 and 8, portion 11a of the lower strip 11 of sheet 2 preferably is also at least opposite to, and more preferably at least partially matches, a wall 31 of said tubular element 5, 6, 7 or 8 which is orthogonal to wall 9 thereof, that is orthogonal to the wall corresponding to a short side of the rectangle as the perimeter of which the cross section of said tubular element 5, 6, 7 or 8 is substantially shaped. Based on the provided description of a preferred embodiment, it is apparent that some changes may be introduced by those skilled in the art without however departing from the scope of the invention as defined by the following claims.

## Claims

1. A baking tray (1, 30) for baking food, said tray (1, 30) comprising:
• a metal sheet (2) which is at least partially flat and is delimited by an edge (3);
• a frame (4) for supporting said sheet (2),
said frame (4) comprising one or more metal tubular elements (5, 6, 7, 8), each of which including a first wall (9) extending in length,
said tubular elements (5, 6, 7, 8) being connected to one another so that said first walls (9) describe, as a whole and at least partially, a closed path delimiting, at least partially, a portion of space in said frame (4);
• connecting means (13) of said sheet (2), at said edge (3), to said frame (4), at said tubular elements (5, 6, 7, 8),
wherein further said tray (1, 30) said sheet (2), at said edge (3), being folded over itself so as to comprise an upper strip (10) and a lower strip (11), which are at least partially flat, at least partially mutually opposite and at least partially at a given distance from each other,
the assembly consisting of said upper strip (10), said lower strip (11) and a fold (12) which connects them mutually, at least partially facing said portion of space on the side of the concavity thereof,
said connecting means comprising, for each of said tubular elements (5, 6, 7, 8), a metal bar (13)
• including at least a second wall (14), which is at least partially flat, extending in length and comprising a first edge (15) and a second edge (18), which is opposite to said first edge (15),
each of said first and second edges (15, 18) extending in length substantially in the same direction in which said second wall (14) extends in length,
and
• connected, by means of one or more welds (17), to said tubular element (5, 6, 7, 8) so that said second wall (14) of said bar (13) is:
- arranged transversely to said first wall (9) of said tubular element (5, 6, 7, 8) to which said bar (13) is connected
and
- opposite to said first wall (9) of said tubular element (5, 6, 7, 8) to which said bar (13) is connected, at least at said first edge (15),
for each of said bars (13), said second wall (14), at said second edge (18), being folded over itself so as to comprise an upper strip (19) and a lower strip (20), which are at least partially flat and at least partially mutually opposite and at least partially at a given distance from each other,
for each of said bars (13), the assembly, consisting of said upper strip (19) of said second wall (14) of said bar (13), of said lower strip (20) of said second wall (14) of said bar (13), and of a fold (21) which mutually connects them, facing, on the side of the concavity thereof, said first wall (9) of said tubular element (5, 6, 7, 8) to which said bar (13) is connected,
for each of said tubular elements (5, 6, 7, 8):
• said lower strip (11) of said sheet (2) being at least partially interposed between said upper and lower strips (19, 20) of said second wall (14) of said bar (13) connected to said tubular element (5, 6, 7, 8),
with said edge (3) of said sheet (2) opposite to said fold (21) which mutually connects said upper and lower strips (19, 20) of said second wall (14) of said bar (13) connected to said tubular element (5, 6, 7, 8),
so that said upper and lower strips (19, 20) of said second wall (14) of said bar (13) connected to said tubular element (5, 6, 7, 8) are at least partially mutually opposite with the at least partial interposition of said lower strip (11) of said sheet (2),
and
• said upper strip (19) of said second wall (14) of said bar (13) connected to said tubular element (5, 6, 7, 8) being at least partially interposed between said upper and lower strips (10, 11) of said sheet (2),
so that said upper and lower strips (10, 11) of said sheet are at least partially mutually opposite with the at least partial interposition of said upper strip (19) of said second wall (14) of said bar (13) connected to said tubular element (5, 6, 7, 8),
moreover, for each of said tubular elements (5, 6, 7, 8):
• said lower strip (11) of said sheet (2) being sandwiched between said upper and lower strips (19, 20) of said second wall (14) of said bar (13) connected to said tubular element (5, 6, 7, 8)
and/or
• said upper strip (19) of said second wall (14) of said bar (13) connected to said tubular element (5, 6, 7, 8) being sandwiched between said upper and lower strips (10, 11) of said sheet (2), so that said sheet (2) is connected to said tubular element (5, 6, 7, 8), wherein further said tray being **characterized in that** said sheet (2) is accommodated in said portion of space at least at said edge (3) so as to be at least partially interposed between said tubular elements (5, 6, 7, 8), **in that** said sheet (2) being accommodated in said portion of space at, at least partially, said lower strip (11), and **in that** said second wall (14) of said bar (13) is accommodated in said portion of space so as to be interposed between said tubular elements (5, 6, 7, 8).

2. A tray (1, 30) according to claim 1, **characterized in that**, for each of said bars (13), said edge (3) of said sheet (2) is at a given distance from said fold (21) which mutually connects said upper and lower strips (19, 20) of said second wall (14) of said bar (13).

3. A tray (1) according to one of the preceding claims, **characterized in that** said sheet (2) is entirely accommodated in said portion of space,
for each of said tubular elements (5, 6, 7, 8), said second edge (18) of said second wall (14) of said bar (13) connected to said tubular element (5, 6, 7, 8) is opposite to said fold (12) which mutually connects said upper and lower strips (10, 11) of said sheet (2),
for each of said tubular elements (5, 6, 7, 8), said fold (12) which mutually connects said upper and lower strips (10, 11) of said sheet (2) being opposite to said first wall (9) of said tubular element (5, 6, 7, 8),
for each of said tubular elements (5, 6, 7, 8), said fold (12) which mutually connects said upper and lower strips (10, 11) of said sheet (2) further being at a given distance from said first wall (9) of said tubular element (5, 6, 7, 8).

4. A tray (1) according to claim 3, **characterized in that**, for each of said bars (13), said second edge (18) of said second wall (14) of said bar (13) is at a given distance from said fold (12) which mutually connects said upper and lower strips (10, 11) of said sheet (2).

5. A tray (30) according to claim 1 or 2, **characterized in that** said sheet (2) lies outside said portion of space at least at:
• said upper strip (10) of said sheet (2),
• a first portion (11a) of said lower strip (11) of said sheet (2), which is consecutive to said upper strip (10) of said sheet (2)
and
• said fold (12) which mutually connects said upper and lower strips (10, 11) of said sheet (12),
for each of said tubular elements (5, 6, 7, 8), said lower strip (11) of said sheet (2) being interposed between, and possibly sandwiched between, said upper and lower strips (19, 20) of said second wall (14) of said bar (13) connected to said tubular element (5, 6, 7, 8), at, at least partially, a second portion (11b) of said lower strip (11) of said sheet (2) including said edge (3) of said sheet (2),
said first and second portions (11a, 11b) of said lower strip (11) of said sheet (2) being joined to each other by a third portion (11c) of said lower strip (11) of said sheet (2),
said sheet (2) being accommodated in said portion of space at said second portion (11b) of said lower strip (11) of said sheet (11) and, at least partially, of said third portion (11c) of said lower strip (11) of said sheet (2) so as to be interposed between said tubular elements (5, 6, 7, 8) at least at said second portion (11b) of said lower strip (11) of said sheet (2) and, at least partially, of said third portion (11c) of said lower strip (11) of said sheet (2),
the assembly consisting of said upper strip (10) of said sheet (2), said lower strip (11) of said sheet (2) and said fold (12) which mutually connects them facing said portion of space on the side of the concavity thereof at least at said second portion (11b) of said lower strip (11) of said sheet (2) and, at least partially, of said third portion (11c) of said lower strip (11) of said sheet (2),
for each of said tubular elements (5, 6, 7, 8), said second edge (18) of said second wall (14) of said bar (13) connected to said tubular element (5, 6, 7, 8) is opposite to said third portion (11c) of said lower strip (11) of said sheet (2),
for each of said tubular elements (5, 6, 7, 8), said third portion (11c) of said lower strip (11) of said sheet (2) is opposite to said first wall (9) of said tubular element (5, 6, 7, 8),
for each of said tubular elements (5, 6, 7, 8), said third portion (11c) of said lower strip (11) of said sheet (2) is also at a given distance from said first wall (9) of said tubular element (5, 6, 7, 8).

6. A tray (30) according to claim 5, **characterized in that**, for each of said bars (13), said second edge (18) of said second wall (14) of said bar (13) is at a given distance from said third portion (11c) of said lower strip (11) of said sheet (2).

7. A tray (1, 30) according to one of the preceding claims, **characterized in that** each of said tubular elements (5, 6, 7, 8) has a cross section shaped as a rectangle, with a side of said rectangle corresponding to said first wall (9) of said tubular element (5, 6, 7, 8),
for each of said tubular elements (5, 6, 7, 8), said bar (13) connected to said tubular element (5, 6, 7, 8)
• having a substantially "L"-shaped cross section with an arm of said L corresponding to said second wall (14) of said first bar (13)
and
• being opposite and connected, by means of one or more welds (17), at a wall (16) corresponding to the other arm of said L, to said tubular element (5, 6, 7, 8) at said first wall (9) of the latter.

8. A tray (30) according to claim 7 when claim 7 depends on claim 5 or 6, **characterized in that** for each of said tubular elements (5, 6, 7, 8), said first portion (11a) of said lower strip (11) of said sheet (2) is at least partially opposite to said tubular element (5, 6, 7, 8) at a wall (31) of the latter at a side of said rectangle orthogonal to said side corresponding to said first wall (9) of said tubular element (5, 6, 7, 8).

9. A tray (1, 30) according to one of the preceding claims, **characterized in that**, in each of said bars (13), said upper and lower strips (19, 20) of said second wall (14) of said bar (13) are parallel to said sheet (2).

10. A tray (1, 30) according to one of the preceding claims, **characterized in that** for each of said tubular elements (5, 6, 7, 8), said first wall (9) of said tubular element (5, 6, 7, 8) is orthogonal to said sheet (2).

## Patentansprüche

1. Backblech (1, 30) zum Backen von Speisen, wobei die Platte (1, 30) umfasst:
• ein Blech (2), das zumindest teilweise flach ist und durch eine Kante (3) begrenzt ist;
• einen Rahmen (4) zum Tragen des Blechs (2),
wobei der Rahmen (4) ein oder mehrere rohrförmige Metallelemente (5, 6, 7, 8) umfasst, von denen jedes eine erste Wand (9) umfasst, die sich in der Länge erstreckt,
wobei die rohrförmigen Elemente (5, 6, 7, 8) so miteinander verbunden sind, dass die ersten Wände (9) als Ganzes und zumindest teilweise einen geschlossenen Weg beschreiben, der zumindest teilweise einen Teil des Raums im Rahmen (4) begrenzt;
• Verbindungsmittel (13) des Blechs (2), an der Kante (3), zum Rahmen (4), an den rohrförmigen Elementen (5, 6, 7, 8),
wobei weiter das Blech (1, 30) und das Blech (2) an der Kante (3) auf sich selbst zurückgefaltet ist, so dass es einen oberen Streifen (10) und einen unteren Streifen (11) aufweist, die zumindest teilweise flach sind, zumindest teilweise einander gegenüberliegend sind und zumindest teilweise in einem bestimmten Abstand voneinander,
wobei die Baugruppe aus dem oberen Streifen (10), dem unteren Streifen (11) und einer Falte (12), die sie miteinander verbindet, besteht und zumindest teilweise in Richtung des genannten Raumabschnitts auf der Konkavitätsseite desselben gerichtet ist,
wobei die Verbindungsmittel für jedes der rohrförmigen Elemente (5, 6, 7, 8) eine Metallstange (13) umfassen
• umfassend mindestens eine zweite Wand (14), die zumindest teilweise flach ist, sich in der Länge erstreckt und eine erste Kante (15) und eine zweite Kante (18) umfasst, der der ersten Kante (15) gegenüberliegt,
wobei jeweils der erste und zweite Kanten (15, 18), die sich in ihrer Länge im Wesentlichen in derselben Richtung erstrecken, in der sich die zweite Wand (14) in ihrer Länge erstreckt,
und
• mittels einer oder mehrerer Schweißnähte (17) mit dem rohrförmigen Element (5, 6, 7, 8) verbunden ist, so dass die zweite Wand (14) der Stange (13):
- quer zur ersten Wand (9) des rohrförmigen Elements (5, 6, 7, 8) angeordnet ist, mit dem die Stange (13) verbunden ist
und
- gegenüber der ersten Wand (9) des rohrförmigen Elements (5, 6, 7, 8), mit dem die Stange (13) verbunden ist, zumindest an der ersten Kante (15),
für jede der Stangen (13), wobei die zweite Wand (14) an der zweiten Kante (18) auf sich selbst zurückgefaltet ist, um einen oberen Streifen (19) und einen unteren Streifen (20) zu umfassen, die zumindest teilweise flach und zumindest teilweise einander gegenüberliegend sind und zumindest teilweise in einem vorgegebenen Abstand voneinander,
wobei für jeden der Stangen (13) ist die Baugruppe bestehend aus dem oberen Streifen (19) der zweiten Wand (14) der Stange (13), dem unteren Streifen (20) der zweiten Wand (14) der Stange (13) und einer Falte (21), die sie miteinander verbindet, auf der Seite ihrer Konkavität der ersten Wand (9) des rohrförmigen Elements (5, 6, 7, 8) zugewandt ist, mit denen die Stange (13) verbunden ist, für jedes der rohrförmigen Elemente (5, 6, 7, 8):
• wobei der untere Streifen (11) des Blechs (2) zumindest teilweise zwischen den oberen und unteren Streifen (19, 20) der zweiten Wand (14) der Stange (13) liegt, die mit dem rohrförmigen Element (5, 6, 7, 8) verbunden ist,
wobei die Kante (3) des Blechs (2) gegenüber der Falte (21) liegt, die die oberen und unteren Streifen (19, 20) der zweiten Wand (14) der Stange (13) miteinander verbindet, die mit dem rohrförmigen Element (5, 6, 7, 8) verbunden sind,
so dass die oberen und unteren Kanten (19, 20) der zweiten Wand (14) der Stange (13) mit dem rohrförmigen Element (5, 6, 7, 8) verbunden sind und zumindest teilweise einander gegenüberliegen, wobei der untere Streifen (11) des Blechs (2) zumindest teilweise dazwischen liegt,
und
• wobei der obere Streifen (19) der zweiten Wand (14) der Stange (13), der mit dem rohrförmigen Element (5, 6, 7, 8) verbunden ist, zwischen dem oberen und dem unteren Streifen (10, 11) des Blechs (2) liegt,
so dass die oberen und unteren Streifen (10, 11) des Blechs zumindest teilweise einander gegenüberliegen, wobei der obere Streifen (19) der zweiten Wand (14) der Stange (13) zumindest teilweise dazwischen liegt, die mit dem rohrförmigen Element (5, 6, 7, 8) verbunden ist,
außerdem für jedes der rohrförmigen Elemente (5, 6, 7, 8):
• der untere Streifen (11) des Blechs (2) zwischen den oberen und unteren Streifen (19, 20) der zweiten Wand (14) der Stange (13) liegt, die mit dem rohrförmigen Element (5, 6, 7, 8) verbunden ist
und/oder
• wobei der obere Streifen (19) der zweiten Wand (14) der Stange (13), der mit dem röhrenförmigen Element (5, 6, 7, 8) verbunden ist, zwischen dem oberen und dem unteren Streifen (10, 11) der Folie eingeklemmt ist Metall (2),
so dass das Blech (2) mit dem rohrförmigen Element (5, 6, 7, 8) verbunden ist, wobei das Backblech **dadurch gekennzeichnet ist, dass** das Blech (2) zumindest an der Kante (3) in dem Raumabschnitt untergebracht ist, so dass es zumindest teilweise zwischen den rohrförmigen Elementen (5, 6, 7, 8) angeordnet ist, wobei das Blech (2) in dem Raumabschnitt in der Nähe zumindest teilweise des unteren Streifens (11) untergebracht ist dass die zweite Wand (14) der Stange (13) in dem Raumabschnitt so untergebracht ist, dass sie zwischen den rohrförmigen Elementen (5, 6, 7, 8) liegt.

2. Backblech (1, 30) nach Anspruch 1, **dadurch gekennzeichnet, dass** für jede der Stangen (13) hat die Kante (3) des Bleches (2) einen bestimmten Abstand von der Falte (21), die die oberen und unteren Streifen (19, 20) der zweiten Wand (14) der Stange (13) miteinander verbindet.

3. Backblech (1) nach einem der vorhergehenden Ansprüche, **dadurch gekennzeichnet, dass** das Blech (2) vollständig in dem Raumabschnitt für jedes der rohrförmigen Elemente (5, 6, 7, 8) untergebracht ist, wobei die zweite Kante (18) der zweiten Wand (14) der mit dem rohrförmigen Element (5, 6, 7, 8) verbundenen Stange (13) gegenüber der Falte (12), die die oberen und unteren Streifen (10, 11) des Bleches (2) miteinander verbindet, liegt,
wobei für jedes der rohrförmigen Elemente (5, 6, 7, 8) ist die Falte (12), die die oberen und unteren Streifen (10, 11) des Bleches (2) miteinander verbindet, gegenüber der ersten Wand (9) des rohrförmigen Elements (5, 6, 7, 8) angeordnet,
wobei für jedes der rohrförmigen Elemente (5, 6, 7, 8) hat die Falte (12), die die oberen und unteren Streifen (10, 11) des Bleches (2) miteinander verbindet, außerdem einen bestimmten Abstand von der ersten Wand (9) des rohrförmigen Elements (5, 6, 7, 8).

4. Backblech (1) nach Anspruch 3, **dadurch gekennzeichnet, dass** für jeden der Stangen (13) liegt die zweite Kante (18) der zweiten Wand (14) der Stange (13) mit einem bestimmten Abstand von der Falte (12), die die oberen und unteren Streifen (10, 11) des Bleches (2) miteinander verbindet.

5. Backblech (30) nach Anspruch 1 oder 2, **dadurch gekennzeichnet, dass** das Blech (2) außerhalb des Raumabschnitts liegt, zumindest an:
• dem oberen Streifen (10) des Bleches (2),
• einem ersten Abschnitt (11a) des unteren Streifens (11) des Bleches (2), der auf den oberen Streifen (10) des Bleches (2) folgt
und
• der Falte (12), die die oberen und unteren Streifen (10, 11) des Bleches (12) miteinander verbindet,
wobei für jedes der rohrförmigen Elemente (5, 6, 7, 8), ist der untere Streifen (11) des Bleches (2) zwischen den oberen und unteren Streifen (19, 20) der zweiten Wand (14) der Stange (13), die mit dem rohrförmigen Element (5, 6, 7, 8) verbunden ist, angeordnet und möglicherweise zwischen diesen eingeklemmt ist, zumindest teilweise an einem zweiten Abschnitt (11b) des unteren Streifens (11) des Bleches (2), einschließlich der Kante (3) des Bleches (2),
wobei der erste und der zweite Abschnitt (11a, 11b) des unteren Streifens (11) des Bleches (2) durch einen dritten Abschnitt (11c) des unteren Streifens (11) des Bleches (2) miteinander verbunden sind,
wobei das Blech (2) in dem Raumabschnitt an dem zweiten Abschnitt (11b) des unteren Streifens (11) des Bleches (11) und zumindest teilweise an dem dritten Abschnitt (11c) des unteren Streifens (11) des Bleches (2) derart untergebracht ist, um zwischen den röhrenförmigen Elementen (5, 6, 7, 8) zumindest an dem zweiten Abschnitt (11b) des unteren Streifens (11) des Bleches (2) und zumindest teilweise an dem dritten Abschnitt (11c) des unteren Streifens (11) des Bleches (2) angeordnet zu sein,
wobei die Baugruppe besteht aus dem oberen Streifen (10) des Bleches (2), dem unteren Streifen (11) des Bleches (2) und der Falte (12), die sie gegenseitig verbindet, wobei sie dem Raumabschnitt auf der Seite der Konkavität davon, zumindest an dem zweiten Abschnitt (11b) des unteren Streifens (11) des Bleches (2) und zumindest teilweise an dem dritten Abschnitt (11c) des unteren Streifens (11) des Bleches (2), gegenüberliegen,
wobei für jedes der rohrförmigen Elemente (5, 6, 7, 8) liegt die zweite Kante (18) der zweiten Wand (14) der Stange (13), die mit dem rohrförmigen Element (5, 6, 7, 8) verbunden ist, gegenüber dem dritten Abschnitt (11c) des unteren Streifens (11) des Bleches (2),
wobei für jedes der rohrförmigen Elemente (5, 6, 7, 8) liegt der dritte Abschnitt (11c) des unteren Streifens (11) des Blattes (2) gegenüber der ersten Wand (9) des rohrförmigen Elements (5, 6, 7, 8),
wobei für jedes der rohrförmigen Elemente (5, 6, 7, 8) befindet sich der dritte Abschnitt (11c) des unteren Streifens (11) des Bleches (2) ebenfalls in einem bestimmten Abstand von der ersten Wand (9) des rohrförmigen Elements (5, 6, 7, 8).

6. Backblech (30) nach Anspruch 5, **dadurch gekennzeichnet, dass** für jede der Stangen (13) liegt die zweite Kante (18) der zweiten Wand (14) der Stange (13) mit einen bestimmten Abstand zum dritten Abschnitt (11c) des unteren Streifens (11) des Bleches (2).

7. Backblech (1, 30) nach einem der vorhergehenden Ansprüche, **dadurch gekennzeichnet, dass** jedes der rohrförmigen Elemente (5, 6, 7, 8) einen rechteckigen Querschnitt aufweist, wobei eine Seite des Rechtecks der ersten Wand (9) des rohrförmigen Elements (5, 6, 7, 8) entspricht,
wobei für jedes der rohrförmigen Elemente (5, 6, 7, 8) die mit dem rohrförmigen Element (5, 6, 7, 8) verbundene Stange (13)
• einen im Wesentlichen "L"-förmigen Querschnitt aufweist, wobei ein Arm des L der zweiten Wand (14) der ersten Stange (13) entspricht
und
• gegenüberliegend und mittels einer oder mehrerer Schweißnähte (17) an einer Wand (16), die dem anderen Arm des L entspricht, mit dem rohrförmigen Element (5, 6, 7, 8) an der ersten Wand (9) des letzteren verbunden ist.

8. Backblech (30) gemäß Anspruch 7, wenn Anspruch 7 von Anspruch 5 oder 6 abhängt, **dadurch gekennzeichnet, dass** für jedes der rohrförmigen Elemente (5, 6, 7, 8) liegt der erste Abschnitt (11a) des unteren Streifens (11) des Bleches (2) zumindest teilweise dem rohrförmigen Element (5, 6, 7, 8) an einer Wand (31) des letzteren an einer Seite des Rechtecks gegenüberliegt, die orthogonal zu der Seite ist, die der ersten Wand (9) des rohrförmigen Elements (5, 6, 7, 8) entspricht.

9. Backblech (1, 30) gemäß einem der vorhergehenden Ansprüche, **dadurch gekennzeichnet, dass** bei jedem der Stangen (13) verlaufen die oberen und unteren Streifen (19, 20) der zweiten Wand (14) der Stange (13) parallel zu dem Blech (2).

10. Backblech (1, 30) nach einem der vorhergehenden Ansprüche, **dadurch gekennzeichnet, dass** für jedes der rohrförmigen Elemente (5, 6, 7, 8) verläuft die erste Wand (9) des rohrförmigen Elements (5, 6, 7, 8) rechtwinklig zu dem Blech (2).

## Revendications

1. Plaque de cuisson (1, 30) pour la cuisson d'aliments,
ladite plaque (1, 30) comprenant:
• une tôle (2) au moins partiellement plane et délimitée par un bord (3);
• un cadre (4) pour supporter ladite tôle (2), le cadre (4) comprenant un ou plusieurs éléments tubulaires métalliques (5, 6, 7, 8), chacun d'entre eux comprenant une première paroi (9) s'étendant en longueur, lesdits éléments tubulaires (5, 6, 7, 8) étant reliés les uns aux autres de sorte que lesdites premières parois (9) décrivent, dans leur ensemble et au moins partiellement, un trajet fermé délimitant, au moins partiellement, une portion d'espace dans ledit cadre (4);
• des moyens de connexion (13) de ladite tôle (2), au niveau dudit bord (3), audit cadre (4), au niveau desdits éléments tubulaires (5, 6, 7, 8), ladite plaque (1, 30) et ladite tôle (2), au niveau dudit bord (3), étant repliées sur elles-mêmes de manière à comporter une bande supérieure (10) et une bande inférieure (11), qui sont au moins partiellement plates, au moins partiellement mutuellement opposées et au moins partiellement à une distance donnée l'une de l'autre, l'ensemble étant constitué de ladite bande supérieure (10), de ladite bande inférieure (11) et d'un pli (12) qui les relie mutuellement, au moins partiellement tourné vers ladite portion d'espace du côté de la concavité de celui-ci, lesdits moyens de connexion comprenant, pour chacun desdits éléments tubulaires (5, 6, 7, 8), une barre métallique (13)
• comprenant au moins une deuxième paroi (14), qui est au moins partiellement plate, s'étendant en longueur et comprenant un premier bord (15) et un deuxième bord (18), qui est opposé audit premier bord (15), chacun desdits premier et deuxième bords (15, 18) s'étendant en longueur sensiblement dans la même direction dans laquelle ladite deuxième paroi (14) s'étend en longueur, et
• étant reliée, au moyen d'une ou plusieurs soudures (17), audit élément tubulaire (5, 6, 7, 8) de sorte que ladite deuxième paroi (14) de ladite barre (13) soit :
- disposée transversalement à ladite première paroi (9) dudit élément tubulaire (5, 6, 7, 8) à laquelle est reliée ladite barre (13) et
- à l'opposé de ladite première paroi (9) dudit élément tubulaire (5, 6, 7, 8) à laquelle est reliée ladite barre (13), au moins au niveau dudit premier bord (15), pour chacune desdites barres (13), ladite deuxième paroi (14), au niveau dudit deuxième bord (18), étant repliée sur elle-même de manière à comporter une bande supérieure (19) et une bande inférieure (20), qui sont au moins partiellement plates et au moins partiellement mutuellement opposées et au moins partiellement à une distance donnée l'une de l'autre, pour chacune desdites barres (13), l'ensemble constitué de ladite bande supérieure (19) de ladite deuxième paroi (14) de ladite barre (13), de ladite bande inférieure (20) de ladite deuxième paroi (14) de ladite barre (13), et d'un pli (21) qui les relie mutuellement, faisant face, du côté de leur concavité, à ladite première paroi (9) dudit élément tubulaire (5, 6, 7, 8) auquel est reliée ladite barre (13), pour chacun desdits éléments tubulaires (5, 6, 7, 8):
• ladite bande inférieure (11) de ladite tôle (2) étant au moins partiellement interposée entre lesdites bandes supérieure et inférieure (19, 20) de ladite deuxième paroi (14) de ladite barre (13) reliée audit élément tubulaire (5, 6, 7, 8), avec ledit bord (3) de ladite tôle (2) opposé audit pli (21) qui relie mutuellement lesdites bandes supérieure et inférieure (19, 20) de ladite deuxième paroi (14) de ladite barre (13) reliée audit élément tubulaire (5, 6, 7, 8), de sorte que lesdites bandes supérieure et inférieure (19, 20) de ladite deuxième paroi (14) de ladite barre (13) reliée audit élément tubulaire (5, 6, 7, 8) soient au moins partiellement mutuellement opposées, avec l'interposition au moins partielle de ladite bande inférieure (11) de ladite tôle (2), et
• ladite bande supérieure (19) de ladite deuxième paroi (14) de ladite barre (13) reliée audit élément tubulaire (5, 6, 7, 8) étant au moins partiellement interposée entre lesdites bandes supérieure et inférieure (10, 11) de ladite tôle (2), de sorte que lesdites bandes supérieure et inférieure (10, 11) de ladite tôle soient au moins partiellement mutuellement opposées avec l'interposition au moins partielle de ladite bande supérieure (19) de ladite deuxième paroi (14) de ladite barre (13) reliée audit élément tubulaire (5, 6, 7, 8), de plus, pour chacun desdits éléments tubulaires (5, 6, 7, 8):
• ladite bande inférieure (11) de ladite tôle (2) étant prise en sandwich entre lesdites bandes supérieure et inférieure (19, 20) de ladite deuxième paroi (14) de ladite barre (13) reliée audit élément tubulaire (5, 6, 7, 8) et/ou
• ladite bande supérieure (19) de ladite deuxième paroi (14) de ladite barre (13) reliée audit élément tubulaire (5, 6, 7, 8) étant prise en sandwich entre lesdites bandes supérieure et inférieure (10, 11) de ladite tôle (2), de sorte que ladite tôle (2) soit reliée audit élément tubulaire (5, 6, 7, 8), de sorte que ladite tôle (2) est reliée audit élément tubulaire (5, 6, 7, 8), dans laquelle ladite plaque étant **caractérisée en ce que** ladite tôle (2) est logée dans ladite partie d'espace au moins sur ledit bord (3) de telle sorte qu'elle est au moins partiellement interposée entre lesdits éléments tubulaires (5, 6, 7, 8), ladite tôle (2) étant logée dans ladite partie d'espace en proximité au moins partiellement de ladite bande inférieure (11) et **en ce que** ladite deuxième paroi (14) de ladite barre (13) est logée dans ladite partie d'espace de sorte qu'elle soit interposée entre lesdits éléments tubulaires (5, 6, 7, 8).

2. Plaque (1, 30) selon la revendication 1, **caractérisée en ce que**, pour chacune desdites barres (13), ledit bord (3) de ladite tôle (2) est à une distance donnée dudit pli (21) qui relie mutuellement lesdites bandes supérieure et inférieure (19, 20) de ladite deuxième paroi (14) de ladite barre (13).

3. Plaque (1) selon l'une des revendications précédentes, **caractérisée en ce que** ladite tôle (2) est entièrement logée dans ladite portion d'espace, pour chacun desdits éléments tubulaires (5, 6, 7, 8), ledit deuxième bord (18) de ladite deuxième paroi (14) de ladite barre (13) reliée audit élément tubulaire (5, 6, 7, 8) étant opposé audit pli (12) qui relie mutuellement lesdites bandes supérieure et inférieure (10, 11) de ladite tôle (2), pour chacun desdits éléments tubulaires (5, 6, 7, 8), ledit pli (12) qui relie mutuellement lesdites bandes supérieure et inférieure (10, 11) de ladite tôle (2) étant opposé à ladite première paroi (9) dudit élément tubulaire (5, 6, 7, 8), pour chacun desdits éléments tubulaires (5, 6, 7, 8), ledit pli (12) qui relie mutuellement lesdites bandes supérieure et inférieure (10, 11) de ladite tôle (2), les bandes inférieures (10, 11) de ladite tôle (2) étant en outre à une distance donnée de ladite première paroi (9) dudit élément tubulaire (5, 6, 7, 8) .

4. Plaque (1) selon la revendication 3, **caractérisée en ce que**, pour chacune desdites barres (13), ledit deuxième bord (18) de ladite deuxième paroi (14) de ladite barre (13) est à une distance donnée dudit pli (12) qui relie mutuellement lesdites bandes supérieure et inférieure (10, 11) de ladite tôle (2).

5. Plaque (30) selon la revendication 1 ou 2, **caractérisée en ce que** ladite tôle (2) se trouve à l'extérieur de ladite partie d'espace au moins au niveau de:
• ladite bande supérieure (10) de ladite tôle (2),
• une première partie (11a) de ladite bande inférieure (11) de ladite tôle (2), qui est consécutive à ladite bande supérieure (10) de ladite tôle (2) et
• ledit pli (12) qui relie mutuellement lesdites bandes supérieure et inférieure (10, 11) de ladite tôle (12),
pour chacun desdits éléments tubulaires (5, 6, 7, 8), ladite bande inférieure (11) de ladite tôle (2) étant interposée entre, et éventuellement prise en sandwich entre, lesdites bandes supérieure et inférieure (19, 20) de ladite deuxième paroi (14) de ladite barre (13) reliée audit élément tubulaire (5, 6, 7, 8), au niveau, au moins partiellement, d'une deuxième partie (11b) de ladite bande inférieure (11) de ladite tôle (2) comprenant ledit bord (3) de ladite tôle (2), lesdites première et deuxième parties (11a, 11b) de ladite bande inférieure (11) de ladite tôle (2) étant jointes l'une à l'autre par une troisième partie (11c) de ladite bande inférieure (11) de ladite tôle (2),
ladite tôle (2) étant logée dans ladite portion d'espace au niveau de ladite deuxième partie (11b) de ladite bande inférieure (11) de ladite tôle (11) et, au moins partiellement, de ladite troisième partie (11c) de ladite bande inférieure (11) de ladite tôle (2) de manière à être interposée entre lesdits éléments tubulaires (5, 6, 7, 8) au moins au niveau de ladite deuxième partie (11b) de ladite bande inférieure (11) de ladite tôle (2) et, au moins partiellement, de ladite troisième partie (11c) de ladite bande inférieure (11) de ladite tôle (2),
l'ensemble étant constitué de ladite bande supérieure (10) de ladite tôle (2), ladite bande inférieure (11) de ladite tôle (2) et ledit pli (12) qui les relie mutuellement en regard de ladite portion d'espace du côté de la concavité de celle-ci au moins au niveau de ladite deuxième portion (11b) de ladite bande inférieure (11) de ladite tôle (2) et, au moins partiellement, de ladite troisième portion (11c) de ladite bande inférieure (11) de ladite tôle (2),
pour chacun desdits éléments tubulaires (5, 6, 7, 8), ledit deuxième bord (18) de ladite deuxième paroi (14) de ladite barre (13) reliée audit élément tubulaire (5, 6, 7, 8) étant opposé à ladite troisième portion (11c) de ladite bande inférieure (11) de ladite tôle (2), pour chacun desdits éléments tubulaires (5, 6, 7, 8), ladite troisième portion (11c) de ladite bande inférieure (11) de ladite tôle (2) étant opposée à ladite première paroi (9) dudit élément tubulaire (5, 6, 7, 8),
pour chacun desdits éléments tubulaires (5, 6, 7, 8), ladite troisième partie (11c) de ladite bande inférieure (11) de ladite tôle (2) étant également à une distance donnée de ladite première paroi (9) dudit élément tubulaire (5, 6, 7, 8).

6. Plaque (30) selon la revendication 5, **caractérisée en ce que**, pour chacune desdites barres (13), ledit deuxième bord (18) de ladite deuxième paroi (14) de ladite barre (13) est à une distance donnée de ladite troisième partie (11c) de ladite bande inférieure (11) de ladite tôle (2).

7. Plaque (1, 30) selon l'une des revendications précédentes, **caractérisée en ce que** chacun desdits éléments tubulaires (5, 6, 7, 8) présente une section transversale en forme de rectangle, avec un côté dudit rectangle correspondant à ladite première paroi (9) dudit élément tubulaire (5, 6, 7, 8),
pour chacun desdits éléments tubulaires (5, 6, 7, 8), ladite barre (13) reliée audit élément tubulaire (5, 6, 7, 8)
• présentant une section transversale sensiblement en forme de "L" avec un bras dudit L correspondant à ladite deuxième paroi (14) de ladite première barre (13)
et
• étant en vis-à-vis et reliée, au moyen d'une ou plusieurs soudures (17), au niveau d'une paroi (16) correspondant à l'autre bras dudit L, audit élément tubulaire (5, 6, 7, 8) au niveau de ladite première paroi (9) de ce dernier.

8. Plaque (30) selon la revendication 7 lorsque la revendication 7 dépend de la revendication 5 ou 6, **caractérisée en ce que** pour chacun desdits éléments tubulaires (5, 6, 7, 8), ladite première partie (11a) de ladite bande inférieure (11) de ladite tôle (2) est au moins partiellement opposée audit élément tubulaire (5, 6, 7, 8) au niveau d'une paroi (31) de ce dernier au niveau d'un côté dudit rectangle orthogonal audit côté correspondant à ladite première paroi (9) dudit élément tubulaire (5, 6, 7, 8).

9. Plaque (1, 30) selon l'une des revendications précédentes, **caractérisée en ce que**, dans chacune desdites barres (13), lesdites bandes supérieure et inférieure (19, 20) de ladite deuxième paroi (14) de ladite barre (13) sont parallèles à ladite tôle (2).

10. Plaque (1, 30) selon l'une des revendications précédentes, **caractérisée en ce que** pour chacun desdits éléments tubulaires (5, 6, 7, 8), ladite première paroi (9) dudit élément tubulaire (5, 6, 7, 8) est orthogonale à ladite tôle (2).
